# EUROPEAN PATENT APPLICATION

(11) **EP 1 813 420 A1**
(43) Date of publication of application: **01.08.2007**
(21) Application number: 05806298.5
(22) Date of filing: 14.11.2005
(51) Int. Cl.: B32B 15/08, B29C 45/14, B32B 5/18, H01M 8/02, B01D 39/20, B29L 31/14, C22C 1/08, C22C 14/00, H01M 8/10

(54) **POROUS COMPOSITE METAL BODY AND METHOD FOR PRODUCING SAME**

(30) Priority: 18.11.2004 JP 2004335079
(71) Applicant: MITSUBISHI MATERIALS CORPORATION, Chiyoda-ku, Tokyo 100-8117 (JP)
(72) Inventor: WADA, Masahiro, Mitsubishi Materials Corporation, Shimoishidoshimo, Kitamoto-shi (JP); KANDA, Eiko, Mitsubishi Materials Corporation, Shimoishidoshimo, Kitamoto-shi (JP); ISOBE, Takeshi, Mitsubishi Materials Corporation, Shimoishidoshimo, Kitamoto-shi (JP); KATO, Komei, Mitsubishi Materials Corporation, Shimoishidoshimo, Kitamoto-shi (JP)
(74) Representative: Gille Hrabal Struck Neidlein Prop Roos
(86) International application number: PCT/JP2005/020800
(87) International publication number: WO 2006/054504

(57) **Abstract**

A composite porous metal body including: a sheet-like metal part (11) containing a porous body having a three-dimensional network structure and being made of titanium or titanium alloy; and a resin part (12) extending in an in-plane direction of the metal part and being integrally formed with the metal part. The handling property of the porous metal body is improved without sacrificing the effective area of the porous metal body.

## Description

### TECHNICAL FIELD

The present invention relates to a composite porous metal body preferable for filters, gas diffusion members, heat-radiating elements, water-absorbing members and the like, and a method for manufacturing the same.

### BACKGROUND ART

Porous metal bodies are applicable to various kinds of use, such as filters, gas diffusion members, heat-radiating members, and water-absorbing members, and are provided in various apparatuses. However, since these types of porous metal bodies generally have disadvantageous properties such as low strength and susceptibility to deformation, problems are known in difficulties in handling of the porous metal bodies.
For preventing damage to a porous body which occurs when the porous body as a filter element is incorporated into a filter apparatus, a technique has been proposed in which a dissimilar material is filled into an end area of a filter element to reinforce the filter element, for example, as disclosed in Patent Document 1.
Further, for providing holes for securing a metal foam to an apparatus, a technique has been proposed in which a solid such as metal or plastic is filled into fine pores of the porous metal body to provide the porous metal body with a portion with increased strength, for example, as disclosed in Patent Document 2.
Patent Document 1: Japanese Unexamined Patent Application, First Publication No. Sho 48-13956
Patent Document 2: Japanese Unexamined Patent Application, First Publication No. Hei 08-53723

### DISCLOSURE OF INVENTION

### PROBLEMS TO BE SOLVED BY THE INVENTION

However, in a case where a surface of a porous body is covered with a resin or the like to improve the strength of the porous body, when it is desired to provide a securing hole in a reinforced portion of the porous body, it becomes necessary to simultaneously cut out the resin and the metal, so that processing and shaping of the porous body becomes difficult.
Further, a porous metal body is generally difficult to produce, and is expensive. Therefore, it is desired to utilize a porous body without waste and to fully exhibit the properties thereof. However, reinforcing a porous body by covering a surface thereof with a resin or a metal reduces the effective area of the porous body, and results in an increase in cost.

The present invention addresses the circumstances described above, with an object to improve handling properties of a porous metal body without sacrificing the effective area thereof.

### MEANS TO SOLVE THE PROBLEMS

The present invention solves the above-mentioned problems and achieves the above-mentioned objects by a composite porous metal body including a sheet-like metal part containing a porous body having a three-dimensional network structure and being made of titanium or titanium alloy, and a resin part extending in an in-plane direction of the metal part and being integrally formed with the metal part.

Further, a method for manufacturing a composite porous metal body of the present invention includes performing insert-molding by using the metal part as an insert and injecting the resin part so as to be connected to an edge of the metal part.

### EFFECT OF THE INVENTION

By the composite porous metal body of the present invention, a resin part can be provided on the edge of the metal part having low strength, thereby rendering it possible to realize a porous metal body exhibiting excellent handling properties. Further, since the resin part extend to protrude from the metal part, it becomes possible to process only the resin part, so that various shapes such as holes or the like for securing to an apparatus can be easily provided.
The place for providing the resin part is not limited to the entire periphery or outer periphery of the metal part, and can be partially provided, if desired. Further, the porous metal body may have a structure in which a plurality of metal parts is connected by resin parts. Furthermore, resins for the resin part are not limited to synthesized resins, and includes rubber materials such as elastomers.

In addition, by the method for manufacturing the composite porous metal body of the present invention, since molten resin enters pores opened to the side portion of the metal part where the metal part is connected to the resin part, and is solidified in the pores, it becomes possible to produce a composite porous metal body in which the metal part and the resin part are securely connected to each other by an anchoring effect.

With respect to the portion where the metal part is connected to the resin part (hereafter, frequently referred to as "connected portion"), due to the three-dimensional structure of the metal part, the depth of the resin part entering the metal part becomes heterogeneous on the entire outer periphery of the metal part, and the connected portion has small spaces forming a complicated structure. When a portion where the skeleton constituting the three-dimensional structure of the metal part is connected to the resin part is observed with magnification, it can be seen that spaces are formed where the skeleton of the metal part is not in contact with the resin part. Thus, the connected portion has a structure in which a multitude of small spaces are observed microscopically. When a composite porous metal body is placed in air or a corrosive gas such as chlorine gas, or when such gas or moisture passes through the metal part, since diffusion of a substance is difficult in the connected portion, difference in level of concentration of oxygen ions and corrosive ions is generated, thereby generating potential difference in the skeleton which causes local cell. Therefore, crevice corrosion occurs in the connected portion of the metal part, so that the resin part may be released from the metal part.

However, in the composite porous metal body of the present invention, since the metal part is constituted from titanium or titanium alloy, it becomes possible to suppress the occurrence of crevice corrosion more certainly than in the case of stainless steel. Therefore, in the composite porous metal body of the present invention, it becomes possible to improve the corrosion resistance of the metal part, regardless of the service condition, and a satisfactory connection of the metal part and the resin part can be maintained over a long period.
Titanium constituting the metal part means a material containing 98.0 wt% or more of titanium. Titanium alloy means a material containing less than 98.0 wt% of titanium, such as Ti-6Al-4V or Ti-10V-2Fe-3Al.

### BRIEF DESCRIPTION OF THE DRAWINGS

Fig. 1 is a plan view showing a composite porous metal body according to the present invention.
Fig. 2 is an enlarged diagram of the portion A of the composite porous metal body shown in Fig. 1.
Fig. 3 is a schematic diagram showing an example of a method of producing a metal part of a composite porous metal body.
Fig.4 is a cross-sectional view showing the principal parts of an insert injection mold for manufacturing the composite porous metal body shown in Fig. 1.
Fig. 5 is a perspective exploded view showing an example of composite porous metal bodies according to the present invention used as filters for a air purifier.
Fig. 6 is a schematic diagram showing an example of a composite porous metal body according to the present invention used as a packing-support plate of a packed column.
Fig. 7 is a schematic diagram showing an example of composite porous metal bodies according to the present invention used as water-absorbing members of a humidifier.
Fig. 8 is a schematic diagram showing an example of composite porous metal bodies according to the present invention used as an electrode and a particle-collecting filter for an electrostatic precipitator.
Fig. 9 is a schematic diagram showing an example of composite porous metal bodies of the present invention used as a heatsink for a CPU cooler.
Fig. 10 is a perspective view showing an example of a composite porous metal body according to the present invention used as gas diffusion electrodes for a fuel cell.
Fig. 11 is a schematic diagram showing an example of a fuel cell provided with gas diffusion electrodes as shown in Fig. 10, wherein the fuel supplying portion is integrated into one.
Fig. 12 is a perspective view showing an example of a fuel cell in which composite porous metal bodies according to the present invention are used as gas diffusion electrodes.
Fig. 13 is a perspective view showing another example of a fuel cell in which composite porous metal bodies according to the present invention are used as gas diffusion electrodes.
Fig. 14 is a cross-sectional view showing an example of a stacked-type fuel cell in which composite porous metal bodies according to the present invention are used as gas diffusion electrodes.
Fig. 15 is a plan view showing a composite porous metal body (fuel electrode) constituting the fuel cell shown in Fig. 14.
Fig. 16 is a plan view showing a composite porous metal body (air electrode) constituting the fuel cell shown in Fig. 14.

### REFERENCE NUMERALS

- 10: Composite porous metal body
- 11: Metal portion
- 12: Resin portion
- 40: Filter (composite porous metal body)
- 50: Packing-support plate (composite porous metal body)
- 60: water-absorbing member(composite porous metal body)
- 70: Electrode (composite porous metal body)
- 71: Filter (composite porous metal body)
- 80: Heat-radiating member
- 90, 91, 110, 120: Gas diffusion electrode (composite porous metal body)

### BEST MODE FOR CARRYING OUT THE INVENTION

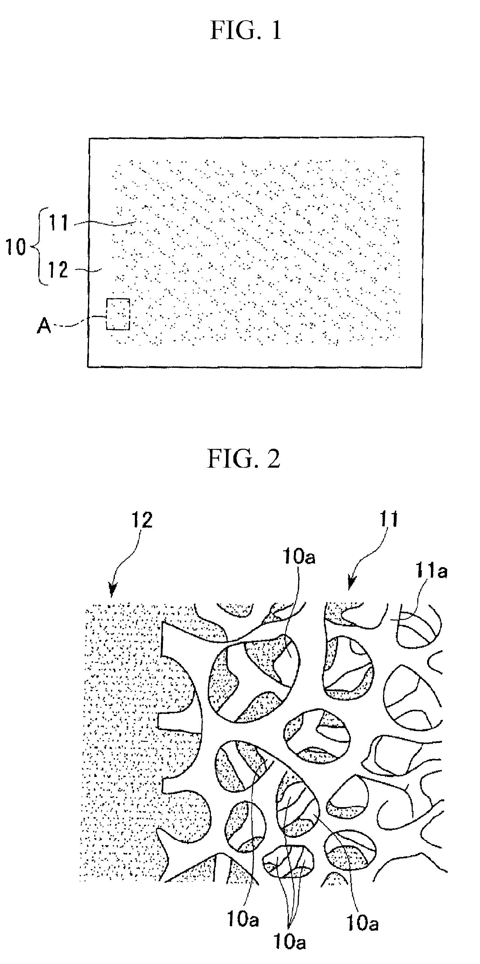

Hereinbelow, various embodiments of the present invention will be described with reference to the figures.
As shown in Fig. 1, a composite porous metal body 10 according to the invention includes a sheet-like metal part 1 l and a resin part 12 extending in the in-plane direction of the metal part 11, which are integrally formed in the shape of a rectangular thin plate.

The metal part 11 is a rectangular thin plate having a three-dimensional network structure. The metal part 11 exhibits air permeability and a water absorption property by virtue of mutual communication between laterally opened pores in various directions, and is characterized in that it has a light weight and a large surface area. The metal part 11 is made of titanium or titanium alloy. More specifically, the metal part 11 is made of a material containing 98.0 wt% or more of titanium, or a material containing less than 98.0 wt% such as Ti-6Al-4V or Ti-10V-2Fe-3Al.

The resin part 12 is formed in the shape of a thin plate connected to an outer peripheral edge of the metal part 11, and is formed with almost the same thickness as the metal part 11 without any height difference therebetween.
The composite porous metal body 10 in which the metal part 11 and the resin part 12 are integrally formed constitutes a single thin-plate member as a whole, and may be attached to various apparatuses by, for example, fixing or sandwiching the resin part 12 so as to be used as filters, water-absorbing members, or heat-radiating elements, and the like.

With respect to the portion where the metal part 11 is connected to the resin part 12 (hereafter, frequently referred to as "connected portion"), due to the three-dimensional structure of the metal part 11, the depth of the resin part 12 entering the metal part 11 becomes heterogeneous on the entire outer periphery of the metal part 11, and the connected portion has small spaces forming a complicated structure. When a portion where the skeleton 11a constituting the three-dimensional structure of the metal part 11 is connected to the resin part 12 is observed with magnification, it can be seen that spaces 10a are formed where the skeleton 11 a of the metal part 11 is not in contact with the resin part 12. Thus, the connected portion has a structure in which a multitude of small spaces 10a are observed microscopically.

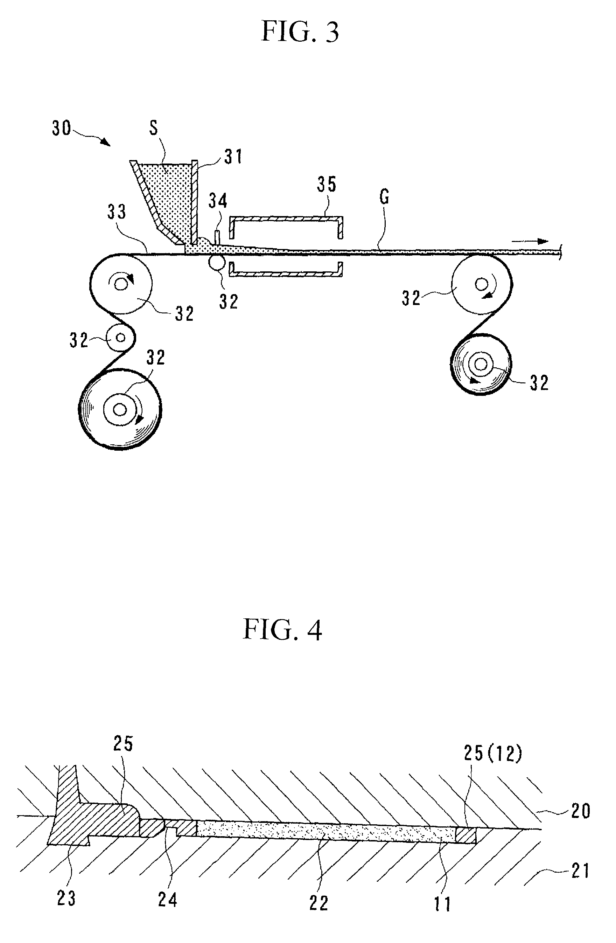

Next, the method for manufacturing a composite porous metal body 10 having a constitution as mentioned above will be described. Firstly, a method for producing the metal part 11 which is a porous metal body will be described with reference to Fig. 3. The porous metal body as the metal part 11 can be produced by various methods. However, in the present embodiment, a method is described in which a slurry S containing a metal powder is shaped into a thin sheet and dried to obtain a green sheet G, followed by calcining the green sheet G.
The slurry S is obtained by mixing together a metal powder such as a titanium powder which has been subjected to hydrogenation and pulverization or a titanium alloy powder obtained by gas atomization, an organic binder (for example, methyl cellulose or hydroxypropylmethyl cellulose), a solvent (water), and, optionally, a foaming agent (for example, nonaqueous hydrocarbon-based organic solvent with five to eight carbons (e.g., neo-pentane, hexane, and heptane)) that are evaporated or sublimated by heating treatment or a defoaming agent (e.g., ethanol).

In the green-sheet manufacturing apparatus 30, the slurry S is stored in a hopper 31. Then, the slurry S is supplied from the hopper 31 onto a carrier sheet 33 to be conveyed by rollers 32. The slurry S on the carrier sheet 33 is extended between the moving carrier sheet 33 and a doctor blade 34 so as to be formed with a required thickness. The molded slurry S is further conveyed by the carrier sheet 33 to pass through a heating furnace 35. Then, the slurry is dried in the heating furnace 35 to form a green sheet G in which the metal powder is joined by an organic binder.

When a foaming agent is contained in the slurry S, the slurry S extended on the carrier sheet 33 is subjected to heating treatment in a high humidity atmosphere and then foamed by a foaming agent to obtain a foamed slurry, before it is dried. Then, the foamed slurry is subjected to drying treatment, thereby forming a green sheet G.
After the green sheet G is detached from the carrier sheet 33, it is degreased and calcinated in a vacuum furnace (not shown) whereby the organic binder is removed to form a porous metal body (metal part 11) in which the metal powder particles are sintered together. The organic binder contains carbon which sometimes cannot be removed by the calcination. Therefore, the metal part 11 inevitably contains carbon. Specifically, the metal part 11 may inevitably contain 0.6 wt% or less of carbon.

Next, a method for manufacturing a composite porous metal body 10 from the thus produced metal part 11 will be described with reference to Fig. 4. A composite porous metal body 10 may be manufactured, for example, by contact bonding a resin part 12 made of a solidified thermoplastic resin with the metal part 11 while heating. However, in the present embodiment, a method is described in which a composite porous metal body having resin part 12 integrated into one is manufactured by insert molding using the metal part 11 as an insert part.

The metal part 11 as an insert part is disposed in a cavity 22 defined between a pair of molds 20 and 21, and a molten resin 25 injected through a gate 24 from a runner 23 is then filled in the cavity 22. Then, the molten resin 25 is cooled and solidified, thereby forming a composite porous metal body 10 in which the metal part 11 and the resin part 12 are integrated into one body. When the composite porous metal body 10 is formed by insert molding, the thickness of the cavity 22 (the size of the cavity in a direction in which molds are opened or closed) at the time when the molds are closed is slightly smaller than that of the metal part 11. Specifically, when the metal part 11 is compressed up to 3 to 90% between the molds 20 and 21 at the time when the molds are closed, even when the injection pressure of the molten resin 25 is applied to the metal part 11, it is possible not only to suppress positional deviation of the metal part 11 in the cavity 23, but also to improve the flatness of a surface of the metal part 11.

In manufacturing a composite porous metal body by insert molding in a manner as described above, in the case where the pore diameter of the metal part 11 is in the range of 10 µm to 2 mm and the porosity thereof is in the range of 40 to 98%, and the resin part 12 is made of polypropylene, when the insert injection molding was performed under conditions wherein the mold temperature was 180°C, the mold clamping force was 80kN, and the injection pressure was 25MPa, it was confirmed that the molten resin 25 impregnated and solidified in pores opened to a side portion of the metal part 11 to a depth of 5 to 1,000µm (anchoring effect), and that the composite porous metal body is not deformed by the molding pressure of the molten resin 25 or the shrinking behavior at the time of cooling and solidifying.
When the pore diameter or porosity of the metal part 11 is too small, there is a possibility that the molten resin cannot enter the pores to exhibit a satisfactory anchoring effect, so that a satisfactory joining strength with resin part 12 cannot be obtained. On the other hand, when the pore diameter or the porosity of metal part 11 is too large, there is a possibility that the strength of the metal part becomes unsatisfactory, so that the composite porous metal body cannot sustain the molding pressure of the resin part 25 or the shrinking behavior at the time of cooling and solidifying, thereby suffering deformation.

The material for the resin part 12 is not limited to polypropylene, so long as it is a material which can be subjected to injection molding, such as a thermoplastic resin or an elastomer. Therefore, the material for the resin part 12 may be appropriately selected depending on use, taking into consideration heat resistance temperature and hardness. Further, the resin part 12 may be flat as shown in Fig. 1, or the resin portion may be provided with holes for allowing screws to be inserted therethrough, grooves for fitting to an apparatus, ribs for improving strength, bosses, etc. during molding of the resin. Alternatively, the metal part 11 may be provided with holes in advance, and the molten resin may be injected so as to fill the holes, thereby manufacturing a composite porous metal body 10 having the resin part 12 provided on the metal part 11 not only at the edge thereof but also at a middle portion thereof.

As mentioned above, the portion where the metal part 11 is connected to the resin part 12 (hereafter, frequently referred to as "connected portion") has a structure in which a multitude of small spaces l0a are observed microscopically. Therefore, as described below, when a composite porous metal body 10 is placed in air or a corrosive gas such as chlorine gas, or when such gas or moisture passes through the metal part 11, since diffusion of a substance is difficult in the connected portion, a difference in the level of concentration of oxygen ions and corrosive ions is generated, thereby generating potential difference in the skeleton 11a which causes local cell. Therefore, crevice corrosion occurs in the connected portion of the metal part 11, so that the resin part 12 may be released from the metal part 11.

However, in the composite porous metal body 10 according to the present invention, since the metal part 11 is made of titanium or titanium alloy, it becomes possible to suppress the occurrence of crevice corrosion more certainly than in the case of stainless steel. Therefore, in the composite porous metal body 10 according to the present invention, it becomes possible to improve the corrosion resistance of the metal part 11, regardless of the service condition, and a satisfactory connection of the metal part 11 and the resin part 12 can be maintained over a long period.

The thus manufactured composite porous metal body 10 may be used in the following applications.

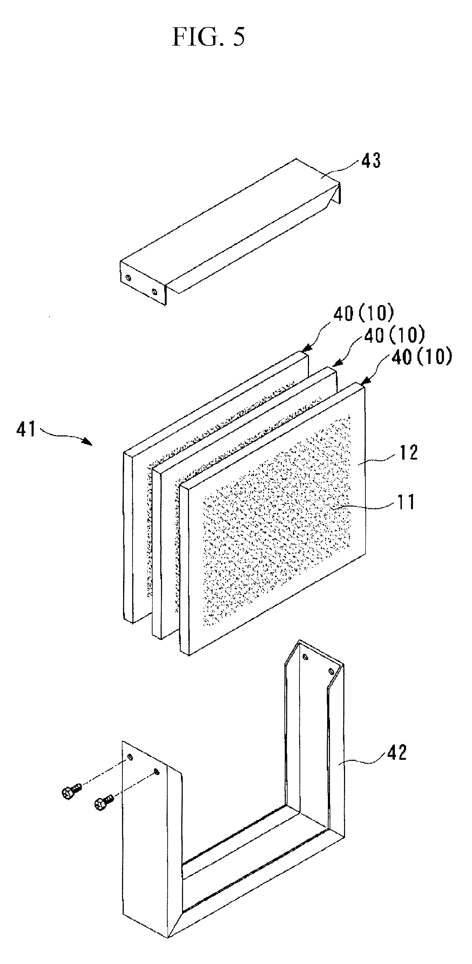

Fig. 5 shows a filter unit 41 for a multilayer filter apparatus (e.g., an air purifier), which is equipped with composite porous metal bodies 10 as filters 40. The filter unit 41 accommodates filters 40.
The filter unit 41 has a structure in which a plurality of filters 40 is inserted in a filter box 42 made of a resin or a metal, and a top member 43 is attached to the filter box.

In the filter unit 41, by constituting the resin part 11 of the filter 40 with an elastic member such as an elastomer, the filter box 42 and the top member 43 can be secured air-tightly, so that a fluid to be filtered may be passed through the metal part 11 without leakage. Further, by producing the metal part 11 so as to carry a photocatalyst such as titanium oxide, gaseous contaminants captured by the filter may be decomposed by light irradiation, thereby enhancing air purification.

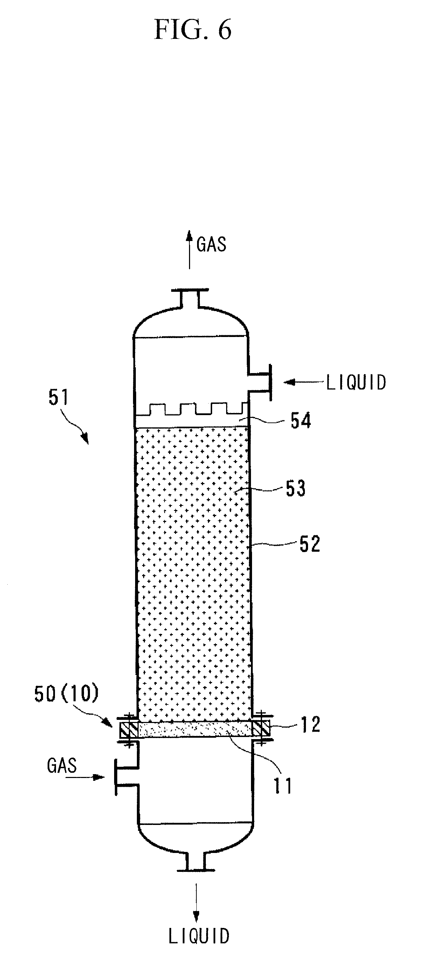

Fig. 6 shows a packed column 51 provided with a composite porous metal body as a packing-support plate 50. The packed column 51 is constituted of a vertical, cylindrical shell 52 packed with a filler 53. In the packed column 51, a liquid is passed through a liquid distribution plate 54 provided at an upper portion of the filler 53 so as to uniformly distribute the liquid which flows downwardly on the surfaces of filler 53. On the other hand, a gas is introduced into the packed column from a lower portion thereof, and the gas flows through spaces between filler 53 to contact the liquid, whereby the components of the gas gets absorbed by the liquid. Thus, the packed column 51 is an apparatus usable for deodorization and cleaning of an exhaust gas.
In the packed column 51, the composite porous metal body 10 as a packing-support plate 50 is secured to shell 52, for example, by securing the resin part 12 provided with screw holes, and the metal part 11 supports the filler while allowing the liquid and the gas to pass therethrough.

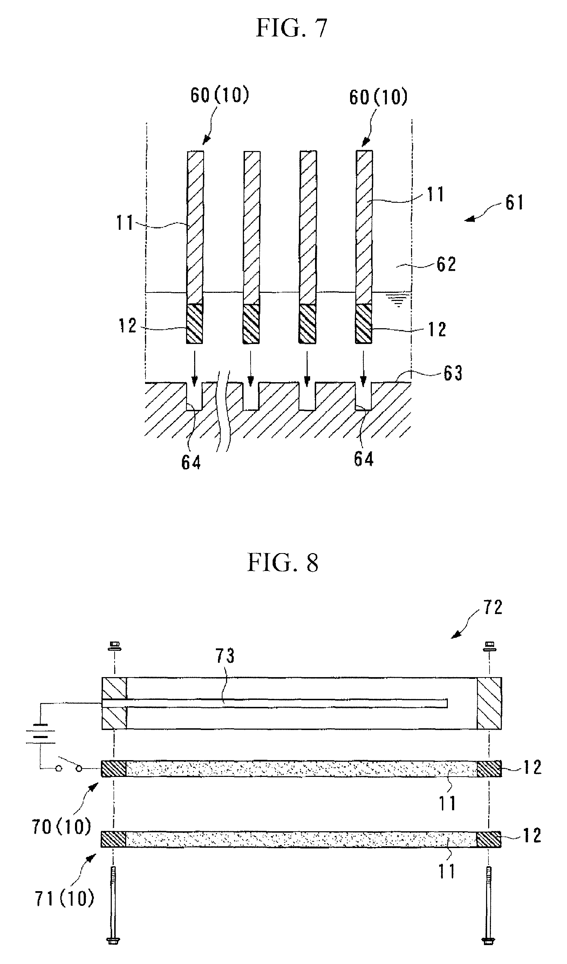

Fig. 7 shows a humidifier 61 provided with composite porous metal bodies 10 as water absorbing members 60. This humidifier 61 has a constitution in which water absorbing members 60 are provided to stand upwardly from the bottom 63 of a tank 62 containing water. The water absorbing members 60 absorb water from the tank 62 by the osmotic pressure of fine, continuous pores thereof, and the absorbed water is vaporized from the metal part 11 having a large surface area, thereby increasing the humidity of the air. In the humidifier 61, a composite porous metal body 10 as a water absorbing member 60 is secured by inserting the resin part 12 into a groove 64 which is formed in the bottom 63 of the tank 62, so that the porous metal part 11 is partially submerged in water.

In the water absorbing member 60, the resin part 12 functions as a part for securing the composite porous metal body 10. Therefore, when the metal part 11 is not strongly required to have high strength, the resin part 11 need not be provided around the entire periphery of the metal part 11, and may be provided on one edge of the rectangular metal part 11.

Fig. 8 shows a precipitator 72 for collecting particles by charging particles, which is provided with composite porous metal bodies 10 as an electrode 70 and a filter 71. In the precipitator 72, a voltage is applied between the composite porous metal body 10 as an electrode 70 and another electrode 73 to discharge, and particles which are charged between the electrodes are collected by the filter 71. Composite porous metal bodies 10 as the electrode 70 and the filter 71 have securing holes provided in the resin parts 12, and are secured with screws to the apparatus by way of the resin parts 12.

Since the electrode 70 and the filter 71 can be secured to the apparatus on the resin part 12, insulation can easily be achieved by forming the resin part 12 with an electrically insulative material, so that the constitution of the apparatus can be simplified. Further, for connecting the electrode 70 with a power supply at the metal part 11, the resin part 12 may be made of a conductive resin, or a metal interconnect may be printed on a surface of the resin part 12.

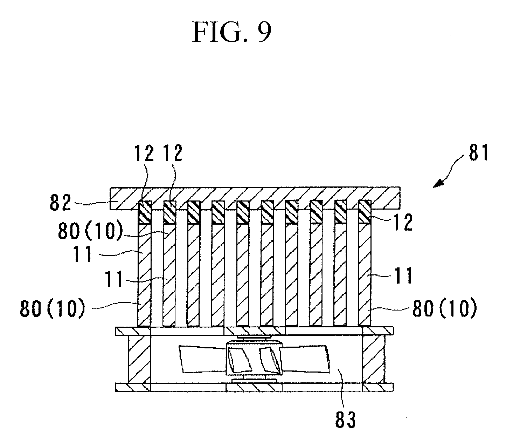

Fig. 9 shows a cooler unit 81 provided with porous metal composite bodies 10 as heat-radiating members 80. The cooler unit 81 has composite porous metal bodies 10 secured to a substrate member 82 at the resin parts 12 so that the composite porous metal bodies 10 are arranged in a line, and the metal parts 11 of the composite porous metal bodies 10 constitute a heatsink. In the cooler unit 81, ventilation by fan 83 cools the metal parts 11, which in turn cools a computer CPU or the like provided on the substrate member 82 side of the cooler unit 81. In this case, a thermoconductive resin is used for the resin parts 12. Since the metal part 11 of the composite porous metal body 10 has a large surface area and is lightweight, the composite porous metal body 10 is preferable as a heat radiator for various apparatuses other than CPU coolers.

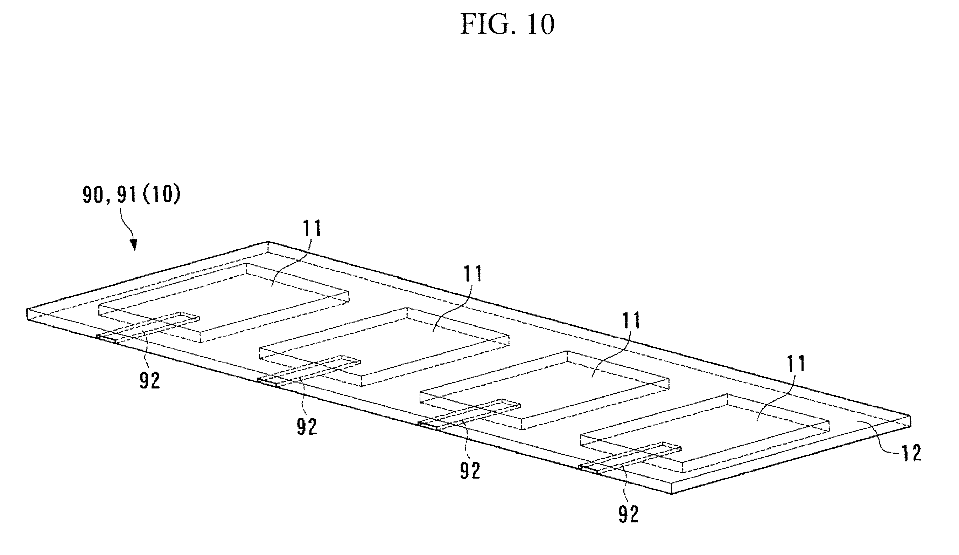

Fig. 10 shows composite porous metal bodies 10 used as gas diffusion electrodes 90 and 91 for a polymer electrolyte fuel cell. In the gas diffusion electrodes 90 and 91, a plurality of metal parts 11 is arranged in an in-plane direction with intervals, and the resin part 12 is provided so as to fill up the intervals between the metal parts 11 and to surround the entire periphery of the metal portions 11. Each metal part 11 has on one end thereof a thin metal tab 92 extending to the outer periphery of the resin part 12.
This thin metal tab 92 is welded to the metal part 11 prior to insert molding, and is integrated into one with resin part 12 by insert molding.

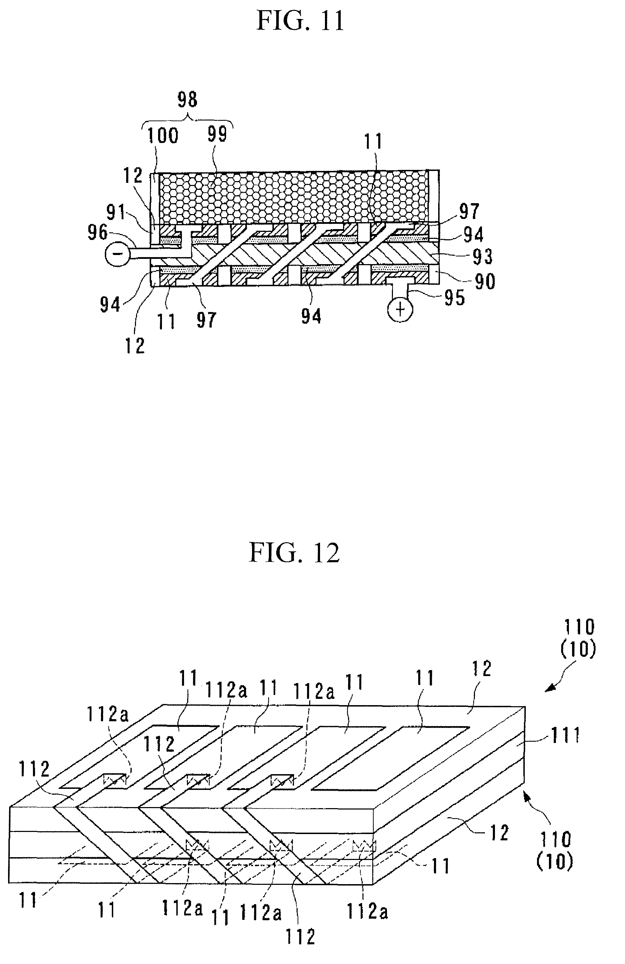

As shown in Fig. 11, this fuel cell has a laminate structure in which an electrolyte membrane 93 is sandwiched between the gas diffusion electrode 90 as a cathode (air electrode) and the gas diffusion electrode 91 as an anode (fuel electrode). Each of the metal parts 11 of the gas diffusion electrodes 90 and 91 has a catalyst 94 coated on a surface thereof which contacts the electrolyte membrane 93. The air electrode 90 and the fuel electrode 91 facing each other via the electrolyte membrane 93 has thin metal tabs 92 connected with wirings 97, so that the metal parts 11 of the air electrode 90 and the fuel electrode 91 are alternately connected in series. The two ends of the metal part 11 (thin metal tab 92) connected in series function as a cathode 95 and an anode 96 of the fuel cell, respectively.

The fuel supply part 98 for supplying fuel to the fuel electrode 91 has a structure in which a porous part 99 holding and supplying fuel by capillary action is provided with a resin part 100 around the outer periphery thereof for sealing. The fuel supply part 98 and the fuel electrode 91 are secured to each other by, for example, ultrasonic joining of the resin part 100 of the fuel supply part 98 with the resin part 12 of the fuel electrode 91.

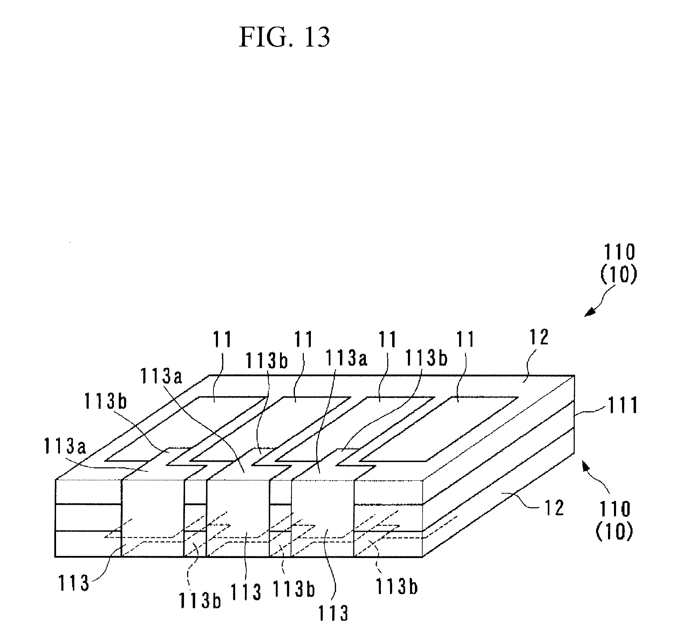

Alternatively, composite porous metal bodies 10 according to the present invention may be used for gas diffusion electrodes 110 in a fuel cell having a structure as shown in Fig. 12 or 13.
In the gas diffusion electrode 110 (10), a plurality of metal parts 11 is arranged in an in-plane direction with intervals, and the resin part 12 is provided so as to fill up the intervals between the metal parts 11 and to surround the entire periphery of the metal portions 11. Each of the metal parts 11 has a catalyst layer (not shown) formed on a surface thereof. The fuel cell has a constitution in which an electrolyte layer 111 is sandwiched between two gas diffusion electrodes 110, so that the catalyst layers of each of the gas diffusion electrodes 110 face the electrolyte layer 111, and the respective metal parts 11 are directly connected in a sequential manner.

In the constitution shown in Fig. 12, U-shaped, conductive connecting members 112 having protrusions 112a biting into the metal parts 11 sequentially connect metal parts 11 located opposite to each other in a cross-shape.
On the other hand, in the constitution shown in Fig. 13, conductive clips 113 each having a pinching portion 113a which pinches a portion of a resin part 12 in the vicinity of two pairs of the opposite metal parts 11 and a connecting portion 113b which extends toward each metal parts 11 from the pinching portion 113a, are used to sequentially connect metal parts 11 located opposite to each other in a cross-shape. By employing a constitution in which a connecting member 112 or 113 is used to connect metal part 11, there is no need for providing other members, such as thin metal tabs 92 as shown in Fig. 10.

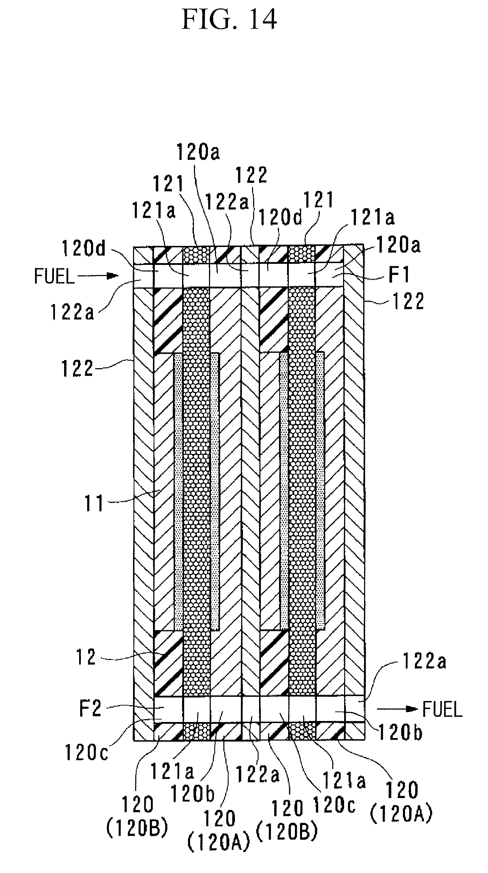

Further, composite porous metal bodies 10 according to the present invention can be used for gas diffusion electrodes of a stacked-type polymer electrolyte fuel cell (Fig. 14) in which electrodes 120, electrolyte layers 121 and separator plates 122 are stacked together to form a multilayer structure. The separator plates 122 are made of a material which does not allow air, a gas as a fuel or liquid to pass therethrough and which has electrical conductivity, such as a carbon plate or a corrosion-resistant metal plate.

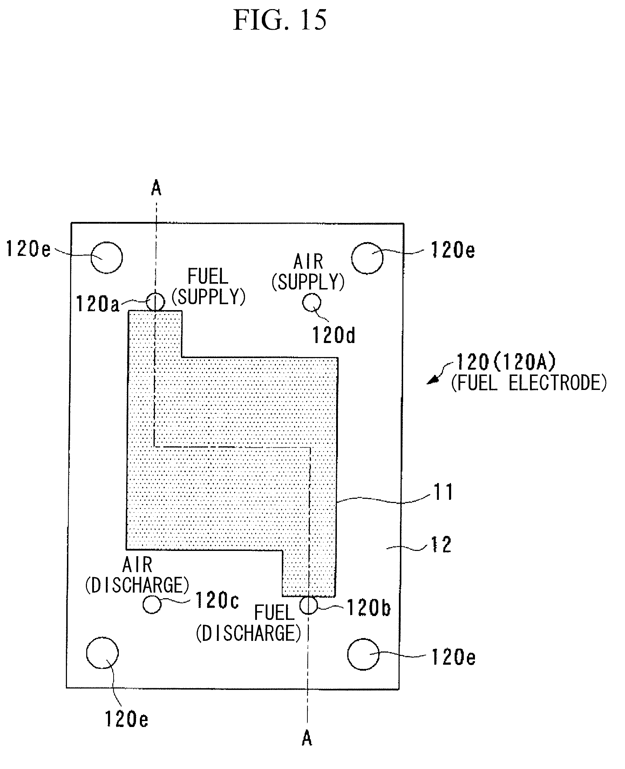

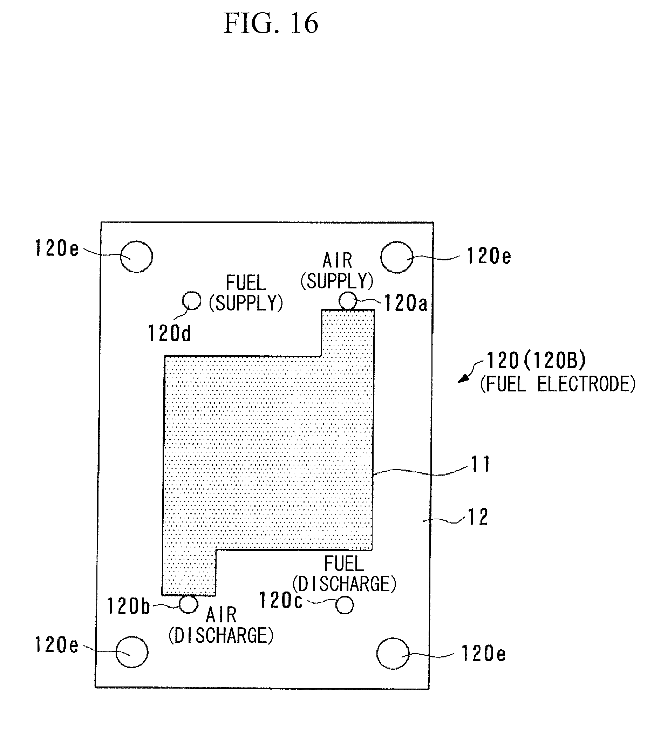

Each of Figs. 15 and 16 shows a composite porous metal body (gas diffusion electrode 120) of the present embodiment. The gas diffusion electrode 120 is a plate-shaped member including a metal part 11 and a resin part 12 surrounding the periphery of the metal part 11 and extending in an in-plane direction. The gas diffusion electrode 120 has communicating holes 120a and 120b which are provided adjacently to the metal part 11, and these communicating holes 120a and 120b penetrate through resin part 12 and communicate with the pores of the resin part 11. The gas diffusion electrode 120 also has through holes 120c and 120d which are provided at positions away from the metal part 11 and penetrate through resin part 12, and bolt insertion holes 120e which are provided at four corners of the resin part 12 and through which fixing bolts or the like are inserted. The communicating holes 120a and 120b and the through holes 120c, 120d and 120e may be formed by molding during the manufacture of the composite porous metal body 10.

The electrolyte layers 121 are provided with through holes which communicate with the through holes of the gas diffusion electrode 120. More specifically, the electrolyte layers 121 are provided with through holes 121 a which communicate with the communicating holes 120a and 120b and through holes 120c and 120d of the gas diffusion electrode, and bolt insertions holes (not shown) which communicate with the bolt insertion holes 120e.
Further, the separator plates 122 are also provided with through holes that communicate with the through holes of the gas diffusion electrode 120. More specifically, the separator plates 122 are provided with through holes 122a which communicate with the communicating holes 120a and 120b and through holes 120c and 120d of the gas diffusion electrode, and bolt insertions holes (not shown) which communicate with the bolt insertion holes 120e.

The gas diffusion electrodes 120, the electrolyte layers 121 and the separator plates 122 stacked together can be integrally fixed together by inserting bolts through the bolt insertion holes and fixing the bolts with nuts.

The two gas diffusion electrodes 120 which are stacked by sandwiching the electrolyte layer 121 are arranged so that the front and the back are reversed, and one serves as a fuel electrode 120A, while the other serves as an air electrode B.
More specifically, the communicating hole 120a of the fuel electrode 120A communicates with through hole 120d of the air electrode 120B, and the communicating hole 120b of the fuel electrode 120A communicates with the through hole 120c of the air electrode 120B, thereby forming a fuel supplying channel F1 and a fuel discharging channel F2 respectively extending in the thicknesswise direction of the fuel cell (i.e., crosswise direction in Fig. 14). The fuel supplied to the fuel supplying channel F1 passes through the communicating pores of the metal part 11 of each of the fuel electrodes 120A to supply hydrogen at the interface between the electrolyte layer 121 and the catalyst layer, and the remaining gas is discharged through the fuel discharging channel F2. Fig. 14 is a cross-sectional view taken along an A-A line shown in Fig. 15, and only shows the fuel supply path.

Similarly, the communicating hole 120c of the fuel electrode 120A communicates with through hole 120b of the air electrode 120B to form an air supplying channel (not shown) extending in the thicknesswise direction of the fuel cell, and the communicating hole 120d of the fuel electrode 120A communicates with the through hole 120a of the air electrode 120B to form an air discharging channel (not shown) extending in the thicknesswise direction of the fuel cell (i.e., crosswise direction in Fig. 14). The air supplied to the air supplying channel passes through the communicating pores of the metal part 11 of each of the air electrodes 120B to supply oxygen at the interface between the electrolyte layer 121 and the catalyst layer, and is discharged together with water produced by a reaction through the air discharging channel.

Thus, in the fuel cell of the present embodiment, a single cell is constituted by sandwiching an electrolyte layer 121 between two gas diffusion electrodes 120, and covering both sides with separator plates 122. Further, by arranging a fuel electrode 120A and an air electrode 120B via a separator plate 122, a constitution can be obtained in which the fuel electrode 120A and the air electrode 120B are air-tightly separated, and an exchange of electrons can be performed through the separator plate 122, thereby rendering it possible to constitute a fuel cell in which a plurality of cells are connected in series.

Each of the constituent members, the shapes thereof and combinations thereof in the embodiments described hereinabove are merely examples, and may be modified depending on required design without departing from the scope of the present invention. For example, although a metal part 11 is produced from a green sheet G in the aforementioned embodiment, there is no restriction, and the metal part 11 may be produced from a nonwoven metal fabric.

### INDUSTRIAL APPLICABILITY

The present invention provides a composite porous metal body in which the handling property thereof is improved while maintaining the effective area thereof, and a method for manufacturing the same.

## Claims

1. A composite porous metal body comprising:
a sheet-like metal part comprising a porous body having a three-dimensional network structure and being made of titanium or titanium alloy; and
a resin part extending in an in-plane direction of said metal part and being integrally formed with said metal part.

2. A method for manufacturing a composite porous metal body of claim 1, comprising:
performing insert-molding by using said metal part as an insert; and
injecting said resin part so as to be connected to an edge of said metal part.
